# EUROPEAN PATENT SPECIFICATION

(11) **EP 4 320 343 B1**
(45) Date of publication and mention of the grant of the patent: **12.03.2025**
(21) Application number: 22713469.9
(22) Date of filing: 29.03.2022
(51) Int. Cl.: F03B 13/18

(54) **ELECTRICITY GENERATING DEVICE**
STROMERZEUGUNGSVORRICHTUNG
DISPOSITIF DE PRODUCTION D'ÉLECTRICITÉ

(30) Priority: 09.04.2021 IT 202100008900
(43) Date of publication of application: 14.02.2024
(73) Proprietor: Mariotti, Gian Luca, 04011 Aprilia (LT) (IT); Mariotti, Tullio, 04011 Aprilia (LT) (IT)
(72) Inventor: MARIOTTI, Tullio, 04011 Aprilia (LT) (IT)
(74) Representative: Bellomia, Paolo
(86) International application number: PCT/IB2022/052872
(87) International publication number: WO 2022/214912

(56) References cited:
- WO-A1-2014/195537
- JP-U- S55 127 886
- US-A1- 2009 211 240
- US-A1- 2011 018 275
- US-A1- 2012 235 413

## Description

This invention relates to an electricity generating device.

In particular, the electricity generating device according to the invention finds a vast field of application in the nautical sector.

In fact, the need is strongly felt for electricity sources which are able to produce energy in order to power electronic devices on board a boat or a craft of various types and/or in order to introduce the energy into the grid in such a way that it can be used elsewhere.

For this reason, a multitude of devices designed for supplying electricity to a floating element, whether it is a boat or a simple buoy, have been developed.

These devices have particular characteristics and differ on the basis of the energy source used to obtain electricity.

In order to guarantee the power supply to the electronic devices on board boats, electricity generators are available on the market which use the combustion of a fossil fuel, for example petrol or diesel.

Disadvantageously, these generators need a constant supply of fuel which must therefore be stored and transported in a sufficient quantity to satisfy the possible requirements.

Moreover, very disadvantageously, these generators have a high environmental impact and, during operation, produce annoying acoustic emissions both for man and for the sea life.

Moreover, solar energy devices have been developed which allow electricity to be generated both for the purpose of powering devices on board the boat and for the purpose of producing electricity to be introduced into the grid.

Disadvantageously, the operation of these devices is constrained to the presence of sunlight. For this reason, the effectiveness of such devices is reduced during the days in which the sun is covered by clouds. Moreover, during the night-time hours, the production of electricity of these devices is substantially reduced to zero.

Moreover, disadvantageously the efficiency of the photovoltaic panels drops over the years, causing a constant decrease in the energy production.

In order to overcome these drawbacks, devices have been developed for generating electricity which use the movement induced by the mass of water on which they float and, more precisely, the wave motion.

An example of a device generating electricity from wave motion is shown for example in US 2012/235413 A1.

These devices comprise a cable wound on a free wheel coupled to the generating shaft of an electricity generator.

Moreover, the cable has one end connected to an anchoring body, for example an anchor designed to constrain the device to the sea bed.

In particular, the wave motion determines a cyclical approach (lowering step) and moving away (lifting step) of the device relative to the anchoring point, for example a portion of the sea bed.

The above-mentioned moving away motion causes a rotation of the free wheel induced by the force which constrains the cable to the sea bed which determines a rotation of the generating shaft (which is kinematically coupled with respect to that direction of rotation) and, therefore, the generation of electricity.

During the subsequent approach step the cable is slack and, therefore, does not cause the rotation of the generating shaft.

In effect, during this step, the cable is rewound on the free wheel, promoting a free rotation of the wheel in the opposite direction of rotation. In this direction of rotation the free wheel does not transmit the motion to the rotation shaft in such a way as not to obstruct the rotation of the generating shaft.

In other words, the approach step is merely aimed at the rewinding of the cable in view of the subsequent step of moving away and, therefore, very disadvantageously no electricity is produced during this step.

In particular, the device comprises rewinding means, for example a rotational spring and/or an electric motor, configured to rewind the cable on the free wheel.

Disadvantageously, the rewinding means have a limited life due to the continuous winding cycles to which they are subjected, which, due to fatigue, lead to inevitable breakages and/or malfunctions and, therefore, the need for frequent maintenance.

Moreover, the use of motor-driven rewinding means causes a waste of electricity and, therefore, a reduction in the overall efficiency of the device.

In this context, the technical purpose which forms the basis of the invention is to propose a electricity generating device which overcomes the above-mentioned drawbacks of the prior art.

In particular, the aim of the invention is to provide an electricity generating device which guarantees a greater efficiency than the prior art devices.

A further aim of the invention is to provide an electricity generating device having a high level of operational flexibility.

A further aim of the invention is to provide an electricity generating device having a reduced environmental impact.

The technical purpose indicated and the aims specified are substantially achieved by an electricity generating device comprising the technical features described in one or more of the appended claims.

The dependent claims correspond to possible embodiments of the invention.

Further features and advantages of the invention are more apparent in the non-limiting description which follows of a preferred non-limiting embodiment of an electricity generating device illustrated in the accompanying drawings, in which:

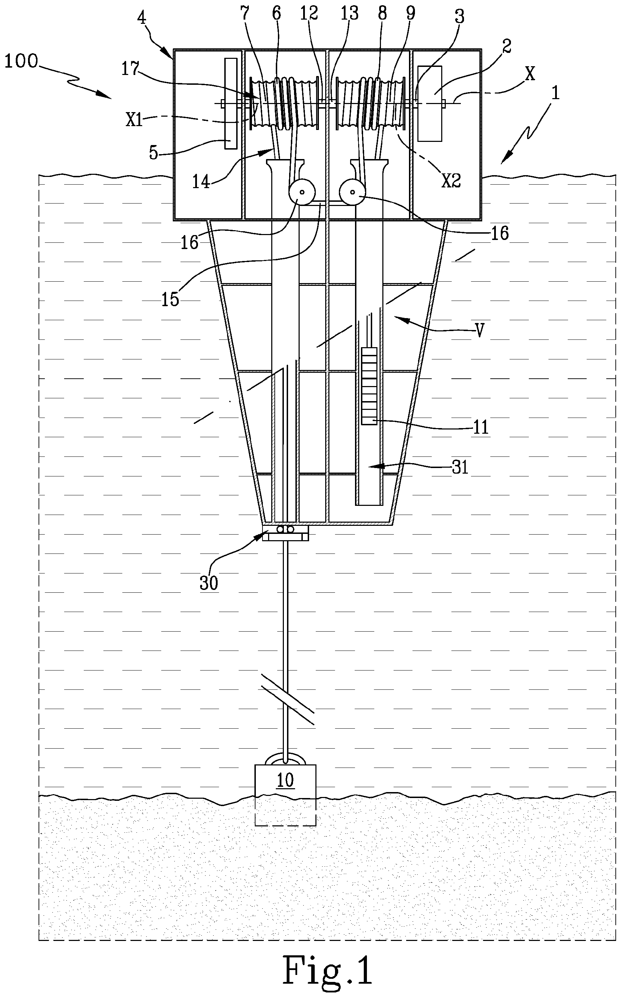

- Figure 1 is a schematic partial cross section view of an electricity generating device in accordance with a possible embodiment of the invention.

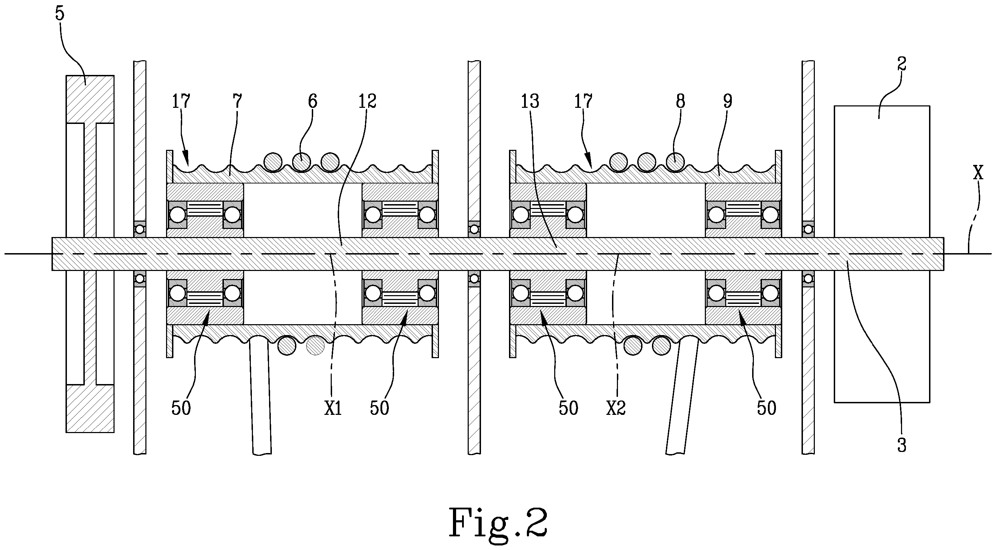

- Figure 2 is a detailed view of a portion of the electricity generating device of Figure 1.

With reference to the accompanying drawings, the numeral 1 denotes in its entirety an electricity generating device which will hereinafter be referred to as the device 1.

The device 1 comprises an electricity generator 2 having a rotatable generating shaft 3 for generating electricity and a floating frame 4 designed to at least partly support the electricity generator 2.

Preferably, the device 1 comprises a flywheel 5 connected to the generating shaft 3 and configured to promote a substantially constant rotation of the generating shaft 3 during a plurality of different operating conditions of the device 1.

Advantageously, the device 1 may comprise a storage and/or exchange unit (not illustrated in the accompanying drawings) operatively connected to the electricity generator 2 for storing a quantity of energy produced by the electricity generator 2 and/or to make the energy available to a plurality of external user devices.

Moreover, the device 1 may comprise means for introducing electricity into the grid (not illustrated in the accompanying drawings) designed to allow an introduction of a quantity of electricity into an external electricity network.

Preferably, the floating frame 4 defines a containment space "V" designed to house at least partly the electricity generator 2 and/or the generating shaft 3 and/or the flywheel 5 and/or the storage unit.

Advantageously, the floating frame 4 may have a shape designed to limit, preferably prevent, an entrance of water into the containment space "V" at least in an operating configuration.

In this way, the floating frame 4 preserves the above-mentioned components positioned inside the containment space "V" limiting, preferably preventing, the triggering of galvanic corrosion phenomena which can lead to a reduction in the working life of the device 1.

The device 1 also comprises a first roller portion 6 wound around a respective first winding body 7 and a second roller portion 8 wound around a respective second winding body 9.

In particular, the first roller portion 6 has an end connected to a sea bed or to a fixed structure, for example by means of an anchoring body 10, and the second roller portion has an end connected to a counterweight 11.

The first roller portion 6 and the second roller portion 8 may be at least partly housed inside the containment space "V".

Advantageously, the device 1 may comprise sliding means 30 acting at least between the first roller portion 6 and the floating frame 4 configured to allow a relative movement, preferably an at least partial sliding, between the first roller portion 6 and the floating frame 4 in such a way as to prevent the entry of impurities inside the containment space "V".

The first roller portion 6 and the second roller portion 8 are configured to rotate the respective winding bodies 7, 9.

According to a possible embodiment and as illustrated in the accompanying drawings, the first winding body 7 and the second winding body 9 may be mounted on the floating frame 4.

Preferably, the first winding body 7 and the second winding body 9 are positioned inside the containment space "V".

Advantageously, the first winding body 7 and the second winding body 9 are supported, respectively, by a first portion of shaft 12 and by a second portion of shaft 13.

In other words, each winding body 7, 9 is supported by a respective portion of shaft 12, 13.

In this way, each winding body 7, 9 is rotatable about an axis of rotation "X1", "X2".

In particular, the first winding body 7 and the second winding body 9 may be rotatable, respectively, about a first axis of rotation "X1" and a second axis of rotation "X2".

According to a possible embodiment and as illustrated in the accompanying drawings, the first axis of rotation "X1" and the second axis of rotation "X2" may be parallel to each other.

Moreover, the first axis of rotation "X1" and the second axis of rotation "X2" may be coincident, giving a high level of stability to the device 1 due at least partly to an increased gyroscopic rigidity.

According to a further possible embodiment not illustrated in the accompanying drawings, the first axis of rotation "X1" and the second axis of rotation "X2" may be mutually transversal, for example perpendicular, without altering the inventive concept which forms the basis of the invention.

The portions of shaft 12, 13 are mechanically connected to the generating shaft 3 for transmitting mechanical power to them.

According to a possible embodiment and as illustrated in the accompanying drawings, the portions of shaft 12, 13 can be made in one piece with the generating shaft 3 guaranteeing a high degree of rigidity and durability to the device 1. In particular, the first axis of rotation "X1" and the second axis of rotation "X2" may coincide with the axis of rotation "X" of the generating shaft 3. Advantageously, each of the winding bodies 7, 9 is connected to the respective portion of shaft 12, 13 by one or more free wheels 50 which allow a torque to be transmitted between the winding body 7, 9 and the corresponding portion of shaft 12, 13 in one direction of rotation and allow a free rotation of the winding body 7, 9 relative to the respective portion of shaft 12, 13 in the other direction.

Moreover, the winding bodies 7, 9 are connected to the respective portion of shaft 12, 13 in such a way that when the first winding body 7 transmits a torque to the respective portion of shaft (the first portion of shaft 12), the second winding body 9, kinematically coupled to the first winding body 7, is freely rotatable on the second portion of shaft 13, and vice versa.

With reference in particular to the embodiment wherein the portions of shaft 12, 13 are made in one piece with the generating shaft 3 but without limiting the application to different embodiments of the invention, the winding bodies 7, 9 may be connected in such a way that the rotation of one of the winding bodies 7, 9 in a direction of rotation causes the rotation of the other winding body in the opposite direction of rotation and vice versa.

According to further possible embodiments, the above-mentioned first axis of rotation "X1" and second axis of rotation "X2" may be parallel and not coincident and the roller portions 6, 8 can determine a movement with the same direction of rotation of the winding bodies 7, 9 without altering the inventive concept which forms the basis of the invention.

The winding bodies 7, 9 are mechanically and/or kinematically connected in such a way that when said floating frame 4 is lifted, with the end of the first roller portion fixed to the sea bed or to the fixed structure, a corresponding lifting of the counterweight 11 follows and a lowering of the floating frame 4 is followed by a corresponding lowering of the counterweight 11.

In particular, the wave motion may cause a movement of the device 1 away from, or lifting, and towards, or lowering, with respect to the sea bed or to the fixed structure to which it is connected by means of the end of the first roller portion 6.

The first roller portion 6, connected to the sea bed or to the fixed structure, and the second roller portion 8, connected to the counterweight 11, cause a rotation of the respective winding bodies 7, 9 and, therefore, of the generating shaft 3.

The winding bodies 7, 9 may be connected in such a way that a movement of the device 1 away causes a lifting of the counterweight 11 and a movement of the device 1 towards causes a corresponding lowering of the counterweight 11.

In other words, the counterweight 11 may be reversibly movable between a position of maximum approach to the second winding body 9, for example corresponding to a condition of maximum spacing of the device 1 from the sea bed or to the fixed structure, and a position furthest away from the second winding body 9, for example corresponding to a condition of minimum spacing of the device 1 from the sea bed or to the fixed structure.

Preferably, each of the winding bodies 7, 9 is connected to the respective portion of shaft 12, 13 in such a way that during the lifting of the floating frame 4, with the end of the first roller portion fixed to the sea bed or to the fixed structure, the first winding body 7 causes a rotation of the generating shaft in a direction of rotation and that during lowering of the floating frame the second winding body 9 causes a rotation of the generating shaft in the same direction of rotation.

In this way, the device 1 allows a generation of electricity both during an approach movement, preferably lowering, and during a movement away, preferably lifting, guaranteeing an increase in the production of electricity relative to the prior art devices.

Advantageously, the floating frame 4 may be configured to allow a reversible movement of the counterweight inside the containment space "V".

In this way, the counterweight 11 can slide between the closest position and the position furthest away in a housing substantially without water and, preferably, containing air guaranteeing a fast response to the movements imposed by the wave motion thanks to the substantial absence of water inside the containment space "V" and, therefore, the component of resistance to movement due at least partly to the Archimedes' force induced by the water.

Advantageously, the floating frame may comprise a movement channel 31 positioned, preferably, inside the containment space "V" and configured to slidably house the counterweight 11 allowing movement between the closest position and the furthest away position.

In particular, the device 1 may comprise the counterweight 11 connected to the second roller portion to promote a lowering of the floating frame 4 and/or the anchoring body 10 connected to the first roller portion for fixing the device to a sea bed or to a fixed structure.

According to a possible embodiment and as illustrated in the accompanying drawings, the device 1 may comprise a single roller unit 14, for example a rope or a transmission chain or the like, defining the first roller portion 6, the second roller portion 8 and a third roller portion 15 interposed between the first roller portion 6 and the second roller portion 8.

In particular, the device 1 may comprise at least one pulley 16 acting on the third roller portion 15 for kinematically coupling the above-mentioned winding bodies 7, 9.

Advantageously, the device 1 may comprise a plurality of pulleys 16 acting at least partly on the third roller portion 15 and operatively connected to each other for kinematically coupling the winding bodies 7, 9.

It should be noted that the pulleys 16 allow the winding bodies 7, 9 to be coupled by a kinematic mechanism irrespective of the relative positioning of the respective axes of rotation, giving high flexibility to the configurations of the device 1.

According to a possible embodiment and as illustrated in the accompanying drawings, the roller unit 14 is made in the form of a rope or cable and the winding bodies 7, 9 are made respectively in the form of a first reel and a second reel designed to allow an at least partial winding, preferably a multiple winding, respectively of the first roller portion 6 and of the second roller portion 8.

In other words, the first roller portion 6 and the second roller portion 8 can, advantageously, define a plurality of windings on the first winding body 7 and on the second winding body 9, respectively, forming a kinematic coupling with a high efficiency.

Preferably, also, the first winding body 7 and/or the second winding body 9 comprise shaped portions 17, for example having dips and/or peaks, in such a way as to increase the surface of contact with the respective roller portions 6, 8 in order to make the kinematic coupling more effective.

According to a further possible embodiment not illustrated in the accompanying drawings, the roller unit 14 is made in the form of a transmission chain, for example a chain with rings or a Galle chain or the like, and the winding bodies 7, 9 and/or the pulleys 16 may have respective kinematic coupling portions designed to couple them kinematically to the roller unit 14.

Very advantageously, this solution guarantees a high degree of compactness for the winding bodies 7, 9 and, therefore, a possible reduction in the overall dimensions inside the containment space "V".

Advantageously, the device 1 may comprise a transmission mechanism, preferably comprising at least one gear wheel, acting on the first winding body 7 and on the second winding body 9 for coupling the movement.

In particular, the transmission mechanism may comprise at least one conical wheel allowing a coupling of the movement between the first winding body 7 and the second winding body 9 irrespective of the relative positioning of the respective axes of rotation.

According to a possible embodiment not illustrated in the accompanying drawings, the transmission mechanism mechanically couples the movement of the winding bodies 7, 9 and the device 1 comprises a first roller unit and a second roller unit defining, respectively, the first and the second roller portions 6, 8. In particular, the first roller portion 6 has a first constraining end, opposite the end connectable to the sea bed or to a fixed structure, connected to the first winding body 7. Moreover, the second roller portion 8 has a second constraining end, opposite the end connected or connectable to a counterweight 11, connected to the second winding body 9.

In accordance with another aspect, the invention relates to a buoy 100 comprising a device 1 for generating electricity as described above.

Advantageously, the buoy 100 may comprise a plurality of devices 1 in such a way as to guarantee a high production of electricity intended to power a plurality of user devices, for example a plurality of signalling lights, and/or to be introduced into the grid.

Preferably, the buoy 100 comprises a fixing system (not illustrated in the accompanying drawings) configured to limit the drifting away of the buoy 100.

Purely by way of a non-limiting example, the fixing system may comprise a plurality of fixing cables, preferably at least partly elastic, designed to connect the buoy 100 to the sea bed.

It should be noted, therefore, that the invention achieves the preset aims by providing an electricity generating device which is able to guarantee a greater efficiency compared with the prior art devices thanks to the possibility of generating electricity both during a movement towards, preferably lowering, and during a movement away, preferably lifting, of the device relative to the sea bed.

Advantageously, the floating frame may be configured to allow a reversible movement of the counterweight inside the containment space, guaranteeing a fast response of the device to the movements imparted by the wave motion.

## Claims

1. A device (1) for generating electricity comprising:
- an electricity generator (2) having a rotatable generating shaft (3) for generating electricity;
- a floating frame (4) designed to at least partly support said electricity generator (2);
- a first roller portion (6) wound around a respective first winding body (7) and a second roller portion (8) wound around a respective second winding body (9), the winding bodies being mounted on the floating frame (4) and the roller portions (6, 8) being configured to rotate the respective winding bodies (7, 9);
wherein each winding body (7, 9) is supported by a respective portion of the shaft (12, 13) and is rotatable about an axis of rotation (X1, X2);
wherein said first roller portion (6) has an end connected to a sea bed or to a fixed structure and said second roller portion (8) has an end connected to a counterweight (11);
wherein said winding bodies are mechanically and/or kinematically connected in such a way that when said floating frame (4) is lifted, with the end of the first roller portion (6) fixed to the sea bed or to the fixed structure, a corresponding lifting of the counterweight (11) follows and a lowering of the floating frame (4) is followed by a corresponding lowering of the counterweight (11);
wherein said portions of shaft (12, 13) are mechanically connected to said generating shaft (3) for transmitting mechanical power to the generating shaft (3); and wherein each of said winding bodies (7, 9) is connected to the respective portion of shaft (12, 13) by at least one free wheel (50) designed to transmit a torque between the winding body and the corresponding portion of shaft (12, 13) in a direction of rotation and a free rotation of the winding body relative to the respective portion of shaft (12, 13) in the other direction, in such a way that when the first winding body (7) transmits a torque to the respective portion of shaft (12) the second winding body (9), kinematically coupled to the first winding body (7), is freely rotatable on the respective portion of shaft (13), and vice versa.

2. The generating device according to claim 1, wherein each of said winding bodies is connected to the respective portion of shaft (12, 13) in such a way that during the lifting of said floating frame (4), with the end of the first roller portion (6) fixed to the sea bed or to the fixed structure, said first winding body (7) causes a rotation of the generating shaft (3) in a direction of rotation and during a lowering of the floating frame (4) said second winding body (9) causes a rotation of the generating shaft (3) in the same direction of rotation.

3. The generating device according to claim 1 or 2, comprising a single roller unit (14) defining said first roller portion (6), said second roller portion (8) and a third roller portion (15) interposed between said first roller portion (6) and said second roller portion (8); and comprising at least one pulley (16) acting on said third roller portion (15) for kinematically coupling said winding bodies.

4. The generating device according to claim 3, wherein said roller unit (14) is made at least partly in the form of a rope or a cable; and wherein said first winding body (7) and said second winding body (9) are made, respectively, in the form of a first reel and a second reel and are configured to receive in at least a partial winding fashion, respectively, at least said first roller portion (6) and at least said second roller portion (8).

5. The generating device according to claim 3, wherein the roller unit (14) is made at least partly in the form of a transmission chain; and wherein said first winding body (7) said the second winding body (9) and/or said at least one pulley (16) have respective kinematic coupling portions designed to couple them kinematically to said roller unit (14).

6. The generating device according to any one of the preceding claims, comprising a transmission mechanism, preferably comprising at least one gear wheel, acting on said first winding body (7) and on said second winding body (9) to couple them kinematically.

7. The generating device according to claim 6 when dependent on claim 1 or 2, comprising a first roller unit (14) and a second roller unit (14) defining, respectively, said first roller portion (6) and said second roller portion (8); wherein said first roller portion (6) has a first constraining end designed to constrain said first roller portion (6) to said first winding body (7); wherein said second roller portion (8) has a second constraining end designed to constrain said second roller portion (8) to said second winding body (9); and wherein said transmission mechanism is configured to kinematically couple said second winding body (7) to said second winding body (9).

8. The generating device according to claim 6 or 7, wherein said transmission mechanism comprises at least one conical wheel designed to make a kinematic coupling between said first winding body (7) and said second winding body (9).

9. The generating device according to any one of the preceding claims, wherein said first winding body (7) and said second winding body (9) are rotatable about a first axis of rotation (X1) and a second axis of rotation (X2), respectively, said first axis of rotation and second axis of rotation being parallel to each other.

10. The generating device according to any one of the preceding claims, wherein said portions of shaft are made in one piece with said generating shaft (3).

11. The generating device according to any one of the preceding claims, wherein said floating frame (4) defines a containment space (V) and has a shape designed to limit, preferably prevent, an entry of water into said containment space (V) at least in an operating configuration; and wherein said floating frame (4) is designed to allow a reversible movement of the counterweight (11) inside said containment space (V).

12. The generating device according to any one of the preceding claims, comprising a flywheel (5) connected to said generating shaft (3) and configured to promote a substantially constant rotation of said generating shaft (3) during a plurality of different operating conditions of said generating device.

13. The generating device according to any one of the preceding claims, comprising an electricity storage unit operatively connected to said electricity generator (2) for storing a quantity of energy produced by said electricity generator (2) and/or means for introducing electricity into the grid designed to allow an introduction of a quantity of electricity into an external electricity network.

14. The generating device according to any one of the preceding claims, comprising a counterweight (11) connected to said second roller portion (8) for promoting a lowering of the floating frame (4) and/or an anchoring body (10) connected to the first roller portion (6) for fixing said device to a sea bed or to a fixed structure.

15. A buoy (100) comprising at least one device for generating electricity according to any one of the preceding claims.

## Patentansprüche

1. Vorrichtung (1) zur Erzeugung von Strom, umfassend:
- einen Stromgenerator (2), aufweisend eine drehbare Erzeugungswelle (3) zur Erzeugung von Strom;
- einen schwimmend gelagerten Rahmen (4), der ausgestaltet ist, um den Stromgenerator (2) mindestens teilweise zu tragen;
- einen ersten Walzenabschnitt (6), der rund um einen jeweiligen ersten Wickelkörper (7) gewunden ist, und einen zweiten Walzenabschnitt (8), der rund um einen jeweiligen zweiten Wickelkörper (9) gewunden ist, wobei die Wickelkörper auf dem schwimmend gelagerten Rahmen (4) montiert sind und die Walzenabschnitte (6, 8) ausgelegt sind, um die jeweiligen Wickelkörper (7, 9) zu drehen,
wobei ein jeder Wickelkörper (7, 9) von einem jeweiligen Abschnitt der Welle (12, 13) getragen wird und rund um eine Rotationsachse (X1, X2) drehbar ist,
wobei der erste Walzenabschnitt (6) ein Ende aufweist, das mit einem Meeresgrund oder einer fixen Struktur verbunden ist, und wobei der zweite Walzenabschnitt (8) ein Ende aufweist, das mit einem Gegengewicht (11) verbunden ist,
wobei die Wickelkörper mechanisch und/oder kinematisch so verbunden sind, dass ein entsprechendes Heben des Gegengewichts (11) folgt, wenn der schwimmend gelagerte Rahmen (4) gehoben wird und dabei das Ende des ersten Walzenabschnitts (6) am Meeresgrund oder an der fixen Struktur fixiert ist, und ein entsprechendes Senken des Gegengewichts (11) auf ein Senken des schwimmend gelagerten Rahmens (4) folgt,
wobei die Wellenabschnitte (12, 13) mechanisch mit der Erzeugungswelle (3) verbunden sind, um mechanische Kraft auf die Erzeugungswelle (3) zu übertragen, und wobei ein jeder der Wickelkörper (7, 9) mit dem jeweiligen Wellenabschnitt (12, 13) durch mindestens ein Freilaufrad (50) verbunden ist, das ausgestaltet ist, um ein Drehmoment zwischen dem Wickelkörper und dem entsprechenden Wellenabschnitt (12, 13) in einer Drehrichtung und eine freie Drehung des Wickelkörpers relativ zum jeweiligen Wellenabschnitt (12, 13) in die andere Richtung zu übertragen, sodass sich der zweite Wickelkörper (9) kinematisch mit dem ersten Wickelkörper (7) verbunden frei auf dem jeweiligen Wellenabschnitt (13) drehen kann und umgekehrt, wenn der erste Wickelkörper (7) ein Drehmoment auf den jeweiligen Wellenabschnitt (12) überträgt.

2. Erzeugungsvorrichtung nach Anspruch 1, wobei ein jeder der Wickelkörper mit dem jeweiligen Wellenabschnitt (12, 13) verbunden ist, sodass der erste Wickelkörper (7) während des Hebens des schwimmend gelagerten Rahmens (4) mit dem am Meeresgrund oder an der fixen Struktur fixierten ersten Walzenabschnitt (6) eine Drehung der Erzeugungswelle (3) in eine Drehrichtung herbeiführt und der zweite Wickelkörper (9) während eines Senkens des schwimmend gelagerten Rahmens (4) eine Drehung der Erzeugungswelle (3) in die gleiche Drehrichtung herbeiführt.

3. Erzeugungsvorrichtung nach Anspruch 1 oder 2, umfassend eine einzelne Walzeneinheit (14), definierend den ersten Walzenabschnitt (6), den zweiten Walzenabschnitt (8) und einen dritten Walzenabschnitt (15), der zwischen dem ersten Walzenabschnitt (6) und dem zweiten Walzenabschnitt (8) eingesetzt ist, und umfassend mindestens eine Riemenscheibe (16), die auf den dritten Walzenabschnitt (15) wirkt, um die Wickelkörper kinematisch zu kuppeln.

4. Erzeugungsvorrichtung nach Anspruch 3, wobei die Walzeneinheit (14) mindestens teilweise in der Form eines Seils oder eines Kabels ausgebildet ist und wobei der erste Wickelkörper (7) und der zweite Wickelkörper (9) jeweils in der Form einer ersten Spule und einer zweiten Spule ausgebildet und ausgelegt sind, um auf mindestens eine Teilwickelart jeweils mindestens den ersten Walzenabschnitt (6) und mindestens den zweiten Walzenabschnitt (8) aufzunehmen.

5. Erzeugungsvorrichtung nach Anspruch 3, wobei die Walzeneinheit (14) mindestens teilweise in der Form einer Antriebskette ausgebildet ist und wobei der erste Wickelkörper (7) und der zweite Wickelkörper (9) und/oder mindestens eine Riemenscheibe (16) jeweilige kinematische Kupplungsabschnitte aufweisen, die ausgestaltet sind, um sie kinematisch mit der Walzeneinheit (14) zu kuppeln.

6. Erzeugungsvorrichtung nach einem der vorhergehenden Ansprüche, umfassend einen Antriebsmechanismus, vorzugsweise umfassend mindestens ein Zahnrad, wirkend auf den ersten Wickelkörper (7) und auf den zweiten Wickelkörper (9), um diese kinematisch zu kuppeln.

7. Erzeugungsvorrichtung nach Anspruch 6, wenn abhängig von Anspruch 1 oder 2, umfassend eine erste Walzeneinheit (14) und eine zweite Walzeneinheit (14), definierend jeweils den ersten Walzenabschnitt (6) und den zweiten Walzenabschnitt (8), wobei der erste Walzenabschnitt (6) ein erstes Befestigungsende aufweist, das ausgestaltet ist, um den ersten Walzenabschnitt (6) am ersten Wickelkörper (7) zu befestigen, wobei der zweite Walzenabschnitt (8) ein zweites Befestigungsende aufweist, das ausgestaltet ist, um den zweiten Walzenabschnitt (8) am zweiten Wickelkörper (9) zu befestigen, und wobei der Antriebsmechanismus ausgelegt ist, um den zweiten Wickelkörper (7) kinematisch mit dem zweiten Wickelkörper (9) zu kuppeln.

8. Erzeugungsvorrichtung nach Anspruch 6 oder 7, wobei der Antriebsmechanismus mindestens ein Kegelrad umfasst, das ausgestaltet ist, um eine kinematische Kupplung zwischen dem ersten Wickelkörper (7) und dem zweiten Wickelkörper (9) herzustellen.

9. Erzeugungsvorrichtung nach einem der vorhergehenden Ansprüche, wobei der erste Wickelkörper (7) und der zweite Wickelkörper (9) jeweils um eine erste Rotationsachse (X1) und eine zweite Rotationsachse (X2) drehbar sind, wobei die erste Rotationsachse und die zweite Rotationsachse parallel zueinander angeordnet sind.

10. Erzeugungsvorrichtung nach einem der vorhergehenden Ansprüche, wobei die Wellenabschnitte in einem Stück mit der Erzeugungswelle (3) ausgebildet sind.

11. Erzeugungsvorrichtung nach einem der vorhergehenden Ansprüche, wobei der schwimmend gelagerte Rahmen (4) einen Fassungsraum (V) definiert und eine Form aufweist, die ausgestaltet ist, um ein Einströmen von Wasser in den Fassungsraum (V) zumindest in einer Betriebsauslegung zu begrenzen, vorzugsweise zu vermeiden, und wobei der schwimmend gelagerte Rahmen (4) ausgestaltet ist, um eine reversierbare Bewegung des Gegengewichts (11) im Fassungsraum (V) zu erlauben.

12. Erzeugungsvorrichtung nach einem der vorhergehenden Ansprüche, umfassend ein Schwungrad (5), das mit der Erzeugungswelle (3) verbunden und ausgelegt ist, um eine im Wesentlichen konstante Drehung der Erzeugungswelle (3) während einer Vielzahl von unterschiedlichen Betriebsbedingungen der Erzeugungsvorrichtung zu unterstützen.

13. Erzeugungsvorrichtung nach einem der vorhergehenden Ansprüche, umfassend eine Stromspeichereinheit, die betriebswirksam mit dem Stromgenerator (2) verbunden ist, um eine Menge von vom Stromgenerator (2) erzeugter Energie zu speichern, und/oder Mittel, um Strom ins Netz einzuspeisen, die ausgestaltet sind, um eine Einspeisung einer Menge von Strom in ein externes Stromnetz zu erlauben.

14. Erzeugungsvorrichtung nach einem der vorhergehenden Ansprüche, umfassend ein Gegengewicht (11), das mit dem zweiten Walzenabschnitt (8) verbunden ist, um ein Senken des schwimmend gelagerten Rahmens (4) zu unterstützen, und/oder einen Verankerungskörper (10), der mit dem ersten Walzenabschnitt (6) verbunden ist, um die Vorrichtung an einem Meeresgrund oder an einer fixen Struktur zu fixieren.

15. Boje (100), umfassend mindestens eine Vorrichtung zur Erzeugung von Strom nach einem der vorhergehenden Ansprüche.

## Revendications

1. Dispositif (1) de production d'électricité, comprenant :
- un générateur d'électricité (2) ayant un arbre de génération rotatif (3) pour générer de l'électricité ;
- un cadre flottant (4) conçu pour supporter au moins partiellement ledit générateur d'électricité (2) ;
- une première portion de rouleau (6) enroulée autour d'un premier corps d'enroulement (7) respectif et une seconde portion de rouleau (8) enroulée autour d'un second corps d'enroulement (9) respectif, les corps d'enroulement étant montés sur le cadre flottant (4) et les portions de rouleau (6, 8) étant configurées pour faire tourner les corps d'enroulement (7, 9) respectifs ;
dans lequel chaque corps d'enroulement (7, 9) est supporté par une portion respective de l'arbre (12, 13) et est rotatif autour d'un axe de rotation (X1, X2) ; dans lequel ladite première portion de rouleau (6) a une extrémité reliée à un fond marin ou à une structure fixe et ladite seconde portion de rouleau (8) a une extrémité reliée à un contrepoids (11) ;
dans lequel lesdits corps d'enroulement sont reliés mécaniquement et/ou cinématiquement de sorte que lorsque ledit cadre flottant (4) est soulevé, avec l'extrémité de la première portion de rouleau (6) fixée au fond marin ou à la structure fixe, un soulèvement correspondant du contrepoids (11) suit et un abaissement du cadre flottant (4) est suivi d'un abaissement correspondant du contrepoids (11) ;
dans lequel lesdites portions d'arbre (12, 13) sont reliées mécaniquement audit arbre de génération (3) pour transmettre une puissance mécanique à l'arbre de génération (3) ; et dans lequel chacun desdits corps d'enroulement (7, 9) est relié à la portion respective de l'arbre (12, 13) par au moins une roue libre (50) conçue pour transmettre un couple entre le corps d'enroulement et la portion correspondante de l'arbre (12, 13) dans un sens de rotation et une rotation libre du corps d'enroulement par rapport à la portion respective de l'arbre (12, 13) dans l'autre sens, de sorte que lorsque le premier corps d'enroulement (7) transmet un couple à la portion respective de l'arbre (12), le second corps d'enroulement (9), couplé cinématiquement au premier corps d'enroulement (7), peut tourner librement sur la portion respective de l'arbre (13), et vice versa.

2. Dispositif de génération selon la revendication 1, dans lequel chacun desdits corps d'enroulement est relié à la portion respective de l'arbre (12, 13) de sorte que pendant le soulèvement dudit cadre flottant (4), avec l'extrémité de la première portion de rouleau (6) fixée au fond marin ou à la structure fixe, ledit premier corps d'enroulement (7) provoque une rotation de l'arbre de génération (3) dans un sens de rotation et pendant un abaissement du cadre flottant (4), ledit second corps d'enroulement (9) provoque une rotation de l'arbre de génération (3) dans le même sens de rotation.

3. Dispositif de génération selon la revendication 1 ou 2, comprenant une unité de rouleau unique (14) définissant ladite première portion de rouleau (6), ladite deuxième portion de rouleau (8) et une troisième portion de rouleau (15) interposée entre ladite première portion de rouleau (6) et ladite deuxième portion de rouleau (8) ; et comprenant au moins une poulie (16) agissant sur ladite troisième portion de rouleau (15) pour coupler cinématiquement lesdits corps d'enroulement.

4. Dispositif de génération selon la revendication 3, dans lequel ladite unité de rouleau (14) est faite au moins partiellement sous la forme d'une corde ou d'un câble ; et dans lequel ledit premier corps d'enroulement (7) et ledit second corps d'enroulement (9) sont faits, respectivement, sous la forme d'une première bobine et d'une seconde bobine et sont configurés pour recevoir au moins dans un mode à enroulement partiel, respectivement, au moins ladite première portion de rouleau (6) et au moins ladite seconde portion de rouleau (8).

5. Dispositif de génération selon la revendication 3, dans lequel l'unité de rouleau (14) est faite au moins partiellement sous la forme d'une chaîne de transmission ; et dans lequel ledit premier corps d'enroulement (7), ledit second corps d'enroulement (9) et/ou ladite au moins une poulie (16) ont des portions de couplage cinématique respectives conçues pour les coupler cinématiquement à ladite unité de rouleau (14).

6. Dispositif de génération selon l'une quelconque des revendications précédentes, comprenant un mécanisme de transmission, comprenant de préférence au moins une roue dentée, agissant sur ledit premier corps d'enroulement (7) et sur ledit second corps d'enroulement (9) pour les coupler cinématiquement.

7. Dispositif de génération selon la revendication 6, lorsqu'elle dépend de la revendication 1 ou 2, comprenant une première unité de rouleau (14) et une seconde unité de rouleau (14) définissant, respectivement, ladite première portion de rouleau (6) et ladite seconde portion de rouleau (8) ; dans lequel ladite première portion de rouleau (6) a une première extrémité de contrainte conçue pour contraindre ladite première portion de rouleau (6) audit premier corps d'enroulement (7) ; dans lequel ladite seconde portion de rouleau (8) a une seconde extrémité de contrainte conçue pour contraindre ladite seconde portion de rouleau (8) audit second corps d'enroulement (9) ; et dans lequel ledit mécanisme de transmission est configuré pour coupler cinématiquement ledit second corps d'enroulement (7) audit second corps d'enroulement (9).

8. Dispositif de génération selon la revendication 6 ou 7, dans lequel ledit mécanisme de transmission comprend au moins une roue conique conçue pour faire un couplage cinématique entre ledit premier corps d'enroulement (7) et ledit second corps d'enroulement (9).

9. Dispositif de génération selon l'une quelconque des revendications précédentes, dans lequel ledit premier corps d'enroulement (7) et ledit second corps d'enroulement (9) peuvent tourner autour d'un premier axe de rotation (X1) et d'un second axe de rotation (X2), respectivement, ledit premier axe de rotation et ledit second axe de rotation étant parallèles l'un à l'autre.

10. Dispositif de génération selon l'une quelconque des revendications précédentes, dans lequel lesdites portions d'arbre sont faites d'une seule pièce avec ledit arbre de génération (3).

11. Dispositif de génération selon l'une quelconque des revendications précédentes, dans lequel ledit cadre flottant (4) définit un espace de confinement (V) et a une forme conçue pour limiter, de préférence empêcher, une entrée d'eau dans ledit espace de confinement (V) au moins dans une configuration de fonctionnement ; et dans lequel ledit cadre flottant (4) est conçu pour permettre un mouvement réversible du contrepoids (11) à l'intérieur dudit espace de confinement (V).

12. Dispositif de génération selon l'une quelconque des revendications précédentes, comprenant un volant (5) relié audit arbre de génération (3) et configuré pour favoriser une rotation substantiellement constante dudit arbre de génération (3) pendant une pluralité de conditions de fonctionnement différentes dudit dispositif de génération.

13. Dispositif de génération selon l'une quelconque des revendications précédentes, comprenant une unité de stockage d'électricité reliée de manière opérationnelle audit générateur d'électricité (2) pour stocker une quantité d'énergie produite par ledit générateur d'électricité (2) et/ou des moyens pour introduire de l'électricité dans le réseau conçus pour permettre une introduction d'une quantité d'électricité dans un réseau électrique externe.

14. Dispositif de génération selon l'une quelconque des revendications précédentes, comprenant un contrepoids (11) relié à ladite seconde portion de rouleau (8) pour favoriser un abaissement du cadre flottant (4) et/ou un corps d'ancrage (10) relié à la première portion de rouleau (6) pour fixer ledit dispositif à un fond marin ou à une structure fixe.

15. Bouée (100), comprenant au moins un dispositif pour générer de l'électricité selon l'une quelconque des revendications précédentes.
